# DEMANDE DE BREVET EUROPEEN

(11) **EP 0 666 282 A1**
(43) Date de publication de la demande: **09.08.1995**
(21) Numéro de dépôt: 95400200.2
(22) Date de dépôt: 31.01.1995
(51) Int. Cl.: C08K 3/22

(54) **Matériaux polymères difficilement combustibles, leur procédé de préparation et leur utilisation pour l'obtention d'articles difficilement combustibles**

(30) Priorité: 02.02.1994 FR 9401157
(71) Demandeur: ACOME, SOCIETE COOPERATIVE DE TRAVAILLEURS, F-75008 Paris (FR)
(72) Inventeur: Brault, Alain, F-50600 Parigny (FR); Bourdais, Céline, F-50140 Mortain (FR)
(74) Mandataire: Boulinguiez, Didier

(57) **Abrégé**

La présente invention concerne un matériau polymère difficilement combustible comprenant au moins un polymère et un agent ignifugeant, l'agent ignifugeant étant constitué par de l'hydroxyde de magnésium et de l'hydroxyde d'aluminium dans des proportions telles que le rapport en poids entre l'hydroxyde de magnésium et l'hydroxyde d'aluminium est compris entre 20/80 et 60/40 et que la fraction en poids de la somme des teneurs en hydroxyde de magnésium et en hydroxyde d'aluminium par rapport à la somme des teneurs de tous les constituants du matériau est comprise entre 40 et 70%.

## Description

L'invention a pour objet un nouveau matériau polymère difficilement combustible, dont la combustion ne provoque pas de dégagement de gaz nocifs. Elle vise également un nouveau procédé de préparation dudit matériau ainsi que l'utilisation de ce matériau en vue de l'obtention d'articles difficilement combustibles.

Par le terme "matériau polymère", on entend toute substance solide naturelle ou artificielle ou synthétique à base de polymère.

Par l'expression "article difficilement combustible", on désigne tout article présentant la propriété de brûler ou de se consumer lentement.

L'intérêt de tels articles réside essentiellement dans leur utilisation dans des domaines techniques pour lesquels un incendie peut, en se propageant, causer des dégâts importants.

Ainsi, toute combustion d'une construction, même partielle, peut avoir des conséquences fâcheuses.

Il peut s'agir d'ailleurs, soit de constructions dynamiques comme les assemblages mis en oeuvre dans les domaines de l'électrotechnique, des télécommunications, de l'industrie automobile, navale ou aéronautique ou bien encore de constructions statiques comme les réalisations immobilières et le bâtiment en général.

En électrotechnique par exemple, la combustion d'un seul câble peut provoquer, sinon l'arrêt total d'une installation, tout au moins une panne ou une mauvaise transmission qui peut être génératrice de dérangements, de courts-circuits dangereux et donc de coûts.

Or, les câbles électriques étant, pour la plupart d'entre eux, constitués par un faisceau de fils conducteurs protégés par des gaines diélectriques en matière plastique c'est-à-dire facilement inflammables, ceux-ci se montrent particulièrement vulnérables à l'incendie.

Une première façon d'atténuer la vulnérabilité à l'inflammabilité consiste à déposer un revêtement ignifugeant ayant une tenue naturelle à l'incendie, tel qu'un revêtement en PVC ou en un polymère halogéné, sans adjonction de charges. Ce revêtement constitue donc une gaine extérieure protectrice. Ce type d'ignifugation a déjà été mis en oeuvre dans le cadre de la réalisation des câbles souterrains moyenne et basse tension à trois conducteurs et neutre ainsi que pour les câbles de téléphones intérieurs ou pour certaines pièces constitutives d'ouvrages bâtis sur le sol.

Une deuxième façon d'atténuer la vulnérabilité à la combustion d'un constituant consiste en l'incorporation d'agents ignifugeants dans la masse de la matière à protéger, au niveau de sa production ou de sa formulation c'est-à-dire de son mélange avec les charges, les plastifiants ou autres.

Aujourd'hui, la protection extérieure de nombreux articles est souvent assurée par une gaine synthétique à base de PVC.

Cependant, la combustion du PVC présente, d'une part, l'inconvénient de dégager de l'acide chlorhydrique qui est un gaz toxique et corrosif, et d'autre part l'inconvénient d'émettre des fumées épaisses et opaques qui rendent difficiles tant l'évacuation des personnes que l'intervention des secours en cas d'incendie.

Il a donc déjà été proposé de substituer les susdits revêtements à base de PVC par des revêtements à base d'éthylène et d'un agent ignifugeant. Les agents ignifugeants couramment utilisés sont, par exemple, les dérivés du bore et du phosphore, les dérivés d'antimoine, les composés organiques chlorés ou bromés ainsi que les produits halogènes en général.

Ainsi, la demande de brevet européen n° 0 339 760 décrit des compositions de polymères difficilement combustibles comprenant de 15 à 40 % en poids d'un polymère thermoplastique (de préférence l'E.V.A.) et un système ignifugeant constitué d'oxyde ou d'hydroxyde d'aluminium, d'oxyde ou d'hydroxyde de magnésium, de paraffine chlorée et de trioxyde d'antimoine. L'ignifugation à l'aide de composés halogénés utilisés en synergie avec du trioxyde d'antimoine est en effet bien connue.

Mais ces agents ignifugeants présentent un inconvénient important, résidant dans le fait que leur combustion provoque un dégagement de gaz nocifs pour l'homme et son environnement. Ainsi, un dégagement de gaz acide(HCl, HBr, HF) se produit lors de la combustion du matériau ainsi traité, soit lors d'un incendie, soit lors d'opération de recyclage par combustion avec production d'énergie.

Ces fumées sont opaques, corrosives et toxiques, ce qui a pour conséquence de ralentir les évacuations de personnes et l'intervention des pompiers, de provoquer des intoxications graves, et des dégâts importants au matériel informatique et électronique.

Par ailleurs, en cas de recyclage de ces matériaux par incinération, les installations doivent être équipées de matériels de lavage des fumées pour en retirer les acides.

C'est la raison pour laquelle il a déjà été proposé de substituer le système ignifugeant précédent par des hydroxydes ou des hydrates métalliques, qui perdent leur eau de constitution lors de la combustion, provoquant ainsi un effet retardateur de l'incendie.

Par le terme "hydroxyde métallique", on entend tout corps ayant une formule constitutive contenant un métal uni à un ou à plusieurs groupes hydroxyle -OH, le nombre de groupes hydroxyle dépendant évidemment de la valence du métal. On peut citer, par exemple, l'hydroxyde de magnésium Mg(OH)₂, l'hydroxyde d'aluminium Al(OH)₃, l'hydroxyde de calcium Ca(OH)₂.

Par le terme "hydrate métallique", on entend la combinaison d'un corps métallique avec une ou plusieurs molécules d'eau. On peut citer parmi eux l'hydrate de métaborate de baryum ou l'hydrate de sulfate de calcium.

Cependant, pour rendre le matériau difficilement combustible, il est nécessaire de lui incorporer une quantité importante d'hydroxyde ou d'hydrate métallique. Or, l'adjonction en quantité élevée d'hydroxyde ou d'hydrate métallique a pour effet nuisible de diminuer les propriétés mécaniques des matériaux polymères, à savoir leur résistance à la traction et leur allongement à la rupture.

Pour essayer de remédier à cet inconvénient résidant dans la réduction des propriétés mécaniques, il a déjà été proposé de faire comporter aux matériaux polymères une association de deux hydroxydes ou hydrates métalliques.

En effet, il a déjà été observé que l'association de deux hydroxydes ou hydrates métalliques peut conduire à une exaltation mutuelle de leur efficacité en ce qui concerne l'effet difficilement combustible. Cette synergie permet donc de réduire la proportion globale d'hydroxydes ou d'hydrates métalliques à introduire pour obtenir un effet difficilement combustible significatif. Or, la réduction de la proportion globale d'hydroxydes ou d'hydrates ayant pour conséquence une conservation des propriétés mécaniques, la synergie dont il est question permet l'obtention de matériaux qui sont à la fois difficilement combustibles et dont les propriétés mécaniques sont conservées.

Ainsi, quelques expériences relatives au traitement de matériaux à base de polyoléfines par de l'hydroxyde de magnésium et un hydrate minéral, en vue de les rendre à la fois difficilement combustibles et mécaniquement résistants, ont-elles été décrites dans le brevet JP 61 243606.

Les hydrates métalliques dont il est question dans ce brevet englobent les hydroxydes métalliques. Ces hydrates sont évoqués en toute généralité dans la description comme étant l'hydroxyde d'aluminium, l'hydrate de métaborate de baryum, l'hydrate de sulfate de calcium, et font, chacun, l'objet d'exemples isolés.

Pour autant qu'il s'agisse de l'hydroxyde d'aluminium, celui-ci est exemplifié une seule fois, et dans l'exemple en cause, les constituants du matériau sont mis en oeuvre dans des proportions telles que la fraction en poids de l'hydroxyde de magnésium sur l'hydroxyde d'aluminium soit égale à 120/20.

Tout au plus peut-on déduire de ce brevet japonais que le rapport en poids entre l'hydroxyde de magnésium et l'hydroxyde d'aluminium doit être pris en considération et que ce rapport doit être compris entre 60/40 et 95/5.

En effet, il n'est jamais question de mettre en oeuvre l'hydroxyde de magnésium et l'hydroxyde d'aluminium dans d'autres proportions, et pour cause, puisque le brevet en question enseigne qu'en dehors d'un rapport de l'hydroxyde de magnésium sur l'hydroxyde d'aluminium compris dans l'intervalle précédemment mentionné, l'effet difficilement combustible ou la résistance à la traction diminuent de façon très importante.

Or, la Société Demanderesse a eu le mérite de trouver que dès lors que l'on choisit, à titre d'agent ignifugeant une composition particulière d'hydroxyde de magnésium et d'hydroxyde d'aluminium, il est possible d'obtenir des matériaux polymères qui sont difficilement combustibles et qui présentent des propriétés mécaniques, et notamment un allongement à la rupture, particulièrement satisfaisantes.

Le mérite de la Société Demanderesse est d'autant plus grand que le but de l'invention n'a pu être atteint qu'en surmontant les préjugés du susdit brevet japonais. En effet, les matériaux polymères présentant les qualités précédemment citées sont obtenus par la mise en présence d'hydroxyde de magnésium (b) et d'hydroxyde d'aluminium (c) dans des proportions en poids qui sont précisément déconseillées par le brevet japonais, à savoir pour un rapport en poids entre l'hydroxyde de magnésium et l'hydroxyde d'aluminium compris entre 20/80 et 60/40, le taux de charges hydratées en poids étant compris entre 40 et 70%, et de préférence entre 50 et 65%.

Par le terme "taux de charges hydratées en poids", on entend, au sens de la présente invention, la fraction en poids de la somme des teneurs en hydroxyde de magnésium et en hydroxyde d'aluminium par rapport à la somme des teneurs de tous les constituants du matériau.

Par conséquent, l'invention a pour objet un matériau polymère difficilement combustible à base d'au moins un polymère et d'au moins un agent ignifugeant constitué par de l'hydroxyde de magnésium et de l'hydroxyde d'aluminium dans des proportions telles que le rapport en poids entre l'hydroxyde de magnésium et l'hydroxyde d'aluminium soit compris entre 20/80 et 60/40, le taux de charges hydratées en poids étant compris entre 40 et 70% et de préférence entre 50 et 65%.

Selon un mode de réalisation particulièrement avantageux de l'invention, le matériau polymère difficilement combustible à base d'au moins un polymère et d'au moins un agent ignifugeant est constitué par de l'hydroxyde de magnésium et de l'hydroxyde d'aluminium dans des proportions telles que le rapport en poids entre l'hydroxyde de magnésium et l'hydroxyde d'aluminium est compris entre 33/67 et 60/40; son taux de charges hydratées en poids étant compris entre 40 et 70% et de préférence entre 50 et 65%.

Par le terme "polymère", on entend, entre autres, au sens de la présente invention les copolymères de l'éthylène avec un monomère acrylique ; les copolymères de l'éthylène avec un monomère à base d'acrylate d'éthyle (EEA) ou une combinaison de ceux-ci, les copolymères de l'éthylène avec un monomère à base d'acrylate de méthyle (EMA) ou une combinaison de ceux-ci, les copolymères de l'éthylène avec un monomère à base d'acrylate de butyle (EBA) ou une combinaison de ceux-ci, dans des proportions de 20 à 80% en poids d'éthylène ou une combinaison de ceux-ci, les copolymères du propylène et de l'éthylène (EPM ou EPDM) ou une combinaison de ceux-ci, les copolymères (EVA) de l'éthylène et de l'acétate de vinyle (VA) dans des proportions de 7 à 77% d'acétate de vinyle ou une combinaison de ceux-ci.

Les polymères utilisables dans le cadre de l'invention peuvent être non modifiés ou modifiés et ce, par voie chimique et/ou physique.

Lorsqu'on fait appel à un/des polymère(s) modifié(s) chimiquement pour la préparation des matériaux conformes à l'invention, ceux-ci peuvent l'être par greffage, notamment au moyen de silane ou d'anhydride maléique.

Lorsqu'on fait appel à un/des polymère(s) modifié(s) physiquement pour la préparation des matériaux conformes à l'invention, ceux-ci peuvent l'être par irradiation, notamment par irradiation à faible dose.

La définition du terme "polymère" comprend donc, entre autres, le produit commercialisé par la Société Atochem sous la marque Evatane 2805 et qui est un copolymère de l'éthylène et de l'acétate de vinyle (EVA) à 28% d'acétate de vinyle (VA) en poids, greffé avec le vinyltriméthoxysilane, ainsi que le produit commercialisé par la Société Bayer sous la marque Levapren 500 et qui est un copolymère de l'éthylène et de l'acétate de vinyle (EVA) à 50% d'acétate de vinyle (VA) en poids.

L'hydroxyde de magnésium mis en oeuvre dans le cadre de la présente invention peut se présenter sous la forme d'une poudre, en particulier sous la forme d'une poudre de granulométrie moyenne 1 µm, par exemple celle commercialisée par la Société Martins Werk sous la marque Magnifin H10.

L'hydroxyde d'aluminium mis en oeuvre dans le cadre de la présente invention peut se présenter sous la forme d'une poudre, en particulier sous la forme d'une poudre de granulométrie moyenne 1 µm, par exemple celle commercialisée par la Société Martins Werk sous la marque OL 104.

Outre la présence d'hydroxyde de magnésium et d'hydroxyde d'aluminium dans des concentrations caractéristiques précédemment mentionnées, le matériau selon l'invention peut contenir un ou plusieurs adjuvant(s) de toutes natures et fonctions (agents de mise en oeuvre, agents stabilisants, agents anti-oxydants), étant entendu que lesdits adjuvants ne doivent pas nuire significativement au caractère difficilement combustible ni aux propriétés mécaniques dudit matériau.

Le matériau peut notamment contenir, sans que cette liste ne soit limitative:
- un ou plusieurs agents de mise en oeuvre, par exemple du talc,
- un ou plusieurs agents stabilisants tels que les agents anti-ultraviolets comme TiO₂ ou les produits de type HALS (Hindured Amides Light Stabilisor),
- un ou plusieurs agents anti-oxydants, par exemple ceux du type phénolique et/ou ceux du type thioester.

Il convient de souligner que, dans le cadre de l'invention, la mise en oeuvre et la mise en présence entre eux du/des polymère(s), de l'hydroxyde de magnésium, de l'hydroxyde d'aluminium et du/des adjuvant(s) éventuel(s), en particulier les agents de mise en oeuvre, les agents stabilisants et les agents anti-oxydants, peuvent s'effectuer selon une multitude de variantes notamment en ce qui concerne la forme d'introduction des susdits composants et le moment d'introduction.

Le procédé de préparation d'un matériau difficilement combustible conforme à l'invention est caractérisé par le fait que l'on soumet le polymère à une éventuelle modification par voie chimique et/ou physique et que l'on soumet le polymère, éventuellement modifié, l'hydroxyde de magnésium, l'hydroxyde d'aluminium et le/les adjuvant(s) éventuel(s) à un traitement apte à les amener dans un état tel qu'ils sont susceptibles d'être mélangés de façon homogène.

L'éventuelle modification par voie chimique et/ou physique à laquelle on soumet le polymère ainsi que le traitement auquel on soumet le polymère éventuellement modifié, l'hydroxyde de magnésium, l'hydroxyde d'aluminium et le/les adjuvants éventuels peuvent être effectués sur tous types de dispositifs conventionnels, en particulier ceux classiquement utilisés pour la transformation des matériaux polymères, en continu, notamment au moyen d'un dispositif du type extrudeuse, la modification du polymère étant réalisée dans la première zone de l'extrudeuse, le mélange étant effectué dans la deuxième zone, en discontinu, notamment au moyen d'un mélangeur, par exemple un mélangeur du type Banbury.

Selon le procédé conforme à l'invention, la modification chimique à laquelle peut être soumis le polymère peut être un greffage, notamment au moyen d'un silane, effectué en particulier à une température comprise entre 170 et 200°C.

Enfin, le traitement auquel on soumet le polymère modifié ou non, l'hydroxyde de magnésium, l'hydroxyde d'aluminium et le/les adjuvant(s) éventuel(s) peut être, par exemple, un traitement thermique, en particulier un traitement thermique effectué à une température comprise entre 150 et 180°C.

Le procédé peut être mis en oeuvre sous atmosphère inerte, par exemple sous azote, ou sous argon, ou sous atmosphère non inerte.

Afin d'améliorer les propriétés mécaniques et la tenue à la température, les compositions pourront être réticulées soit par immersion dans l'eau si les polymères ont été préalablement greffés au moyen de silane ou par voie physique notamment par irradiation avec des électrons ou des rayons y et ceci, après avoir été soumises à un traitement de mise en forme.

En suite de quoi les matériaux polymères difficilement combustibles obtenus conformément à l'invention, qui constituent des produits industriels nouveaux, peuvent être appliqués à la préparation d'articles difficilement combustibles destinés à être mis en oeuvre dans tous types de constructions et notamment dans les domaines de l'électrotechnique, des télécommunications, de l'automobile, de la construction navale ou aéronautique et du bâtiment sous toutes formes et notamment sous forme de câbles et/ou de conduits et/ou de tubes.

L'invention pourra être encore mieux comprise à l'aide des exemples non limitatifs qui suivent et qui font état de certains modes de réalisation particulièrement avantageux des matériaux polymères difficilement combustibles selon l'invention.

### EXEMPLE 1

Dans le cadre de cet exemple, on étudie l'effet difficilement combustible et les propriétés mécaniques de matériaux polymères conformes à l'invention présentant un taux de charges hydratées en poids de 55%. On compare ces résultats avec ceux obtenus pour des matériaux non conformes à l'invention, c'est-à-dire, d'une part, des matériaux ne contenant qu'un seul hydroxyde métallique, et d'autre part des matériaux selon le brevet JP 61 243606.

Le greffage des polymères est réalisé en introduisant le mélange de polymères sous forme de granulés ainsi que 1 à 2% en poids de silane par rapport au poids de polymères dans une extrudeuse. Le mélange est ensuite porté à une température de 180°C puis il est homogénéisé et extrudé.

Les polymères greffés sont des copolymères (EVA) de l'éthylène et de l'acétate de vinyle (VA) à 28% d'acétate de vinyle (EVA à 28% de VA) et des copolymères de l'éthylène et de l'acétate de vinyle à 50% d'acétate de vinyle (EVA à 50% de VA).

Les polymères ainsi greffés sont mélangés à une température de 160°C avec l'hydroxyde de magnésium et l'hydroxyde d'aluminium ainsi que le talc,TiO₂, l'Irganox ® et le Rhénosorb ®, l'Irganox ® et le Rhénosorb ® étant des agents stabilisants.

Le tableau I ci-après indique la composition des matériaux ainsi préparés (numérotés de 1 à 5). Les compositions 1, 4 et 5 sont conformes à l'art antérieur: les compositions 1 et 5 ne comprenant qu'un seul hydroxyde, la composition 4 étant conforme au brevet JP 61 243606. En revanche, les compositions 2 et 3 sont conformes à l'invention.

**TABLEAU I**

| | **% en poids de composition** | | | | |
|---|---|---|---|---|---|
| **Composant** | **1** | **2** | **3** | **4** | **5** |
| **EVA à 28% de VA** | 21.0% | 21.0% | 21.0% | 21.0% | 21.0% |
| **EVA à 50% de VA** | 16.3% | 16.3% | 16.3% | 16.3% | 16.3% |
| **Al(OH)₃** | 55.9% | 37.3% | 28.0% | 18.6% | 0.0% |
| **Mg(OH)₂** | 0.0% | 18.6% | 28.0% | 37.3% | 55.9% |
| **Talc** | 3.7% | 3.7% | 3.7% | 3.7% | 3.7% |
| **TiO₂** | 1.9% | 1.9% | 1.9% | 1.9% | 1.9% |
| **Irganox 1010** | 0.1% | 0.1% | 0.1% | 0.1% | 0.1% |
| **Rhénosorb** | 1.1% | 1.1% | 1.1% | 1.1% | 1.1% |
| **TOTAL** | 100% | 100% | 100% | 100% | 100% |

Le tableau II ci-après reprend, pour chacune des compositions 1 à 5:
- le rapport b/c,
- l'allongement à la rupture,
- la résistance à la traction,
- l'indice d'oxygène limite (c'est-à-dire le pourcentage d'oxygène nécessaire pour que la combustion soit entretenue dans un essai normalisé); cet indice mesure l'effet difficilement combustible; plus cet indice est élevé, meilleure est la tenue au feu.

**TABLEAU II**

| **Composition** | **1** | **2** | **3** | **4** | **5** |
|---|---|---|---|---|---|
| **b/c** | 0/100 | 33/67 | 50/50 | 67/33 | 100/0 |
| **IOL** | 36 | 42 | 43 | 42 | 40 |
| **Allongement (%)** | 199 | 186 | 180 | 173 | 162 |
| **Résistance (daN/cm²)** | 85 | 99 | 105 | 109 | 113 |

Ce tableau montre que:
- les matériaux 2 et 3 conformes à l'invention présentent un effet de résistance à la combustion nettement supérieur à celui obtenu avec les compositions 1 et 5 de l'art antérieur,
- les matériaux 2 et 3 conformes à l'invention présentent un allongement à la rupture nettement plus satisfaisant que celui résultant de la composition 4 selon le brevet JP 61 243606,
- les matériaux 2 et 3 conformes à l'invention présentent une résistance à la traction bien supérieure à celle du matériau 1 et du même ordre de grandeur que celle du matériau 4 selon le brevet japonais.

Cet exemple illustre donc clairement que la mise en oeuvre des hydroxydes selon l'invention permet une amélioration des propriétés mécaniques et notamment de l'allongement à la rupture des matériaux difficilement combustibles.

### EXEMPLE 2

Dans le cadre de cet exemple, on effectue des comparaisons portant, comme pour l'exemple 1, sur l'effet difficilement combustible et les propriétés mécaniques de matériaux 7 et 8 conformes à l'invention et de matériaux 6, 9 et 10 selon l'art antérieur. Les matériaux 6 et 10 ne comportent qu'un seul hydroxyde; le matériau 9 est conforme au brevet JP 61 24 3606.

Par rapport à l'exemple 1, seul le taux de charges est différent; il s'élève à 50%.

Le tableau III ci-après indique la composition des matériaux préparés de la même façon que pour l'exemple 1.

**TABLEAU III**

| | **% en poids de composition** | | | | |
|---|---|---|---|---|---|
| **Composants** | **6** | **7** | **8** | **9** | **10** |
| **EVA à 28% de VA** | 25.4% | 25.4% | 25.4% | 25.4% | 25.4% |
| **EVA à 50% de VA** | 16.2% | 16.2% | 16.2% | 16.2% | 16.2% |
| **Al(OH)₃** | 50.8% | 32.4% | 23.1% | 13.9% | 0.0% |
| **Mg(OH)₂** | 0.0% | 18.5% | 27.7% | 37.0% | 50.8% |
| **Talc** | 4.2% | 4.2% | 4.2% | 4.2% | 4.2% |
| **TiO₂** | 2.1% | 2.1% | 2.1% | 2.1% | 2.1% |
| **Irganox 1010** | 0.1% | 0.1% | 0.1% | 0.1% | 0.1% |
| **Rhénosorb** | 1.2% | 1.2% | 1.2% | 1.2% | 1.2% |
| **TOTAL** | 100% | 100% | 100% | 100% | 100% |

Le tableau IV présente les mêmes propriétés que le tableau II.

**TABLEAU IV**

| **composition** | **6** | **7** | **8** | **9** | **10** |
|---|---|---|---|---|---|
| **b/c** | 0/100 | 36/64 | 65/45 | 73/27 | 100/0 |
| **IOL** | 36 | 42 | 43 | 43 | 40 |
| **Allongement (%)** | 199 | 186 | 180 | 173 | 162 |
| **Résistance (daN/cm²)** | 85 | 99 | 105 | 109 | 113 |

Ce tableau confirme les conclusions qui avaient été tirées du tableau II et qui concernaient des matériaux à base des mêmes polymères mais présentant un taux de charges différent. En effet, ce tableau met en évidence que:
- les matériaux 7 et 8 conformes à l'invention présentent un effet de résistance à la combustion nettement supérieur à celui obtenu avec les compositions 6 et 10 selon l'art antérieur,
- les matériaux 7 et 8 conformes à l'invention présentent un allongement à la rupture nettement plus satisfaisant que celui résultant de la composition 9 selon le brevet JP 61 243606,
- les matériaux 7 et 8 conformes à l'invention présentent une résistance à la traction bien supérieure à celle du matériau 6 et du même ordre de grandeur que celle du matériau 9 selon le brevet japonais.

### EXEMPLE 3

L'objet de cet exemple est d'évaluer la tenue à la combustion et les propriétés mécaniques de matériaux conformes à l'invention dont les proportions relatives en polymères, en hydroxyde de magnésium et en hydroxyde d'aluminium sont comparables à celles des matériaux élaborés dans le cadre des exemples 1 et 2, mais dont la nature des polymères est différente. Le taux de charges est de 60%.

On mélange des compositions constituées par 17,5% en poids de Levapren 500 ® et 27, 5% en poids d'Evatane 2805 ® greffé par du vinyltriméthoxysilane, avec de l'hydroxyde de magnésium et de l'hydroxyde d'aluminium puis on réticule la composition obtenue par immersion dans l'eau à 75°C pendant 15 heures.

Les compositions des matériaux sont indiquées dans le tableau V. Les matériaux 12 et 13 sont conformes à l'invention, le matériau 14 est conforme au brevet japonais précité et les matériaux 11 et 15 sont conformes à l'art antérieur.

**TABLEAU V**

| | **% en poids de composition** | | | | |
|---|---|---|---|---|---|
| **composant** | **11** | **12** | **13** | **14** | **15** |
| **2805 greffé** | 22.5% | 22.5% | 22.5% | 22.5% | 22.5% |
| **Lev 500** | 17.5% | 17.5% | 17.5% | 17.5% | 17.5% |
| **Al(OH)₃** | 60.0% | 40.0% | 30.0% | 20.0% | 0.0% |
| **Mg(OH)₂** | 0.0% | 20.0% | 30.0% | 40.0% | 60.0% |

Les résultats concernant tant la tenue au feu que les propriétés mécaniques des matériaux 11 à 15 obtenus conformément au protocole précédemment exposé sont rassemblés dans le tableau VI suivant.

**TABLEAU VI**

| **composant** | **11** | **12** | **13** | **14** | **15** |
|---|---|---|---|---|---|
| **b/c** | 0/100 | 33/67 | 50/50 | 67/33 | 100/0 |
| **IOL** | 39 | 45 | 47 | 47 | 43 |
| **Allongement (%)** | 165 | 154 | 149 | 143 | 131 |
| **Résistance (daN/cm²)** | 86 | 101 | 107 | 112 | 118 |

On constate que les conclusions qui avaient été tirées des exemples 1 et 2 sont à nouveau valables dans le cadre de cet exemple.

En effet, ce tableau montre que:
- les matériaux 12 et 13 conformes à l'invention présentent un effet de résistance à la combustion nettement supérieur à celui obtenu avec les compositions 11 et 15 de l'art antérieur,
- les matériaux 12 et 13 conformes à l'invention présentent un allongement à la rupture nettement plus satisfaisant que celui résultant de la composition 14 selon le brevet JP 61 243606,
- les matériaux 12 et 13 conformes à l'invention présentent une résistance à la traction bien supérieure à celle du matériau 11 et du même ordre de grandeur que celle du matériau 14 selon le brevet japonais.

Par conséquent, la supériorité des matériaux selon l'invention en ce qui concerne leur effet difficilement combustible et leurs propriétés mécaniques découle de façon manifeste de tous les exemples précédemment donnés.

## Revendications

1. Matériau polymère difficilement combustible et dont la combustion ne provoque pas de dégagement de gaz nocifs, comprenant au moins un polymère et un agent ignifugeant, caractérisé par le fait que l'agent ignifugeant est constitué par de l'hydroxyde de magnésium et de l'hydroxyde d'aluminium dans des proportions telles que le rapport en poids entre l'hydroxyde de magnésium et l'hydroxyde d'aluminium est compris entre 20/80 et 60/40 et que la fraction en poids de la somme des teneurs en hydroxyde de magnésium et en hydroxyde d'aluminium par rapport à la somme des teneurs de tous les constituants du matériau est comprise entre 40 et 70%.

2. Matériau polymère selon la revendication 1, caractérisé par le fait que le rapport en poids entre l'hydroxyde de magnésium et l'hydroxyde d'aluminium est compris entre 33/67 et 60/40.

3. Matériau polymère selon l'une des revendications 1 ou 2, caractérisé par le fait que la somme des teneurs en hydroxyde de magnésium et en hydroxyde d'aluminium par rapport à la somme des teneurs de tous les constituants du matériau est comprise entre 50 et 65%.

4. Matériau polymère difficilement combustible selon l'une quelconque des revendications 1 à 3, caractérisé par le fait qu'il contient en outre un agent de mise en oeuvre et/ou un agent stabilisant et/ou un agent anti-oxydant.

5. Matériau polymère difficilement combustible selon l'une des revendications 1 à 4, caractérisé par le fait qu'il se présente sous une forme réticulée.

6. Procédé de préparation d'un matériau selon l'une des revendications 1 à 5, caractérisé par le fait que l'on soumet le ou les polymère(s) à une éventuelle modification par voie chimique et/ou physique et que l'on soumet le ou les polymère(s) éventuellement modifié(s), l'hydroxyde de magnésium, l'hydroxyde d'aluminium et le/les adjuvant(s) éventuel(s) à un traitement apte à les amener dans un état tel qu'ils soient susceptibles d'être mélangés de façon homogène.

7. Procédé de préparation d'un matériau selon la revendication 6, caractérisé par le fait que la modification par voie chimique est un greffage.

8. Procédé de préparation d'un matériau selon l'une des revendications 6 ou 7, caractérisé par le fait que le greffage est effectué à une température comprise entre 170 et 200°C.

9. Procédé de préparation d'un matériau selon la revendication 6, caractérisé en ce que le traitement auquel on soumet le polymère éventuellement modifié, l'hydroxyde de magnésium, l'hydroxyde d'aluminium et le/les adjuvant(s) éventuel(s) est un traitement thermique effectué à une température comprise entre 150 et 180°C.

10. Procédé de préparation d'un matériau selon la revendication 6, caractérisé par le fait que le mélange homogène est soumis à un traitement de mise en forme, ce dernier traitement étant éventuellement suivi par une réticulation.

11. Procédé de préparation d'un matériau selon la revendication 9, caractérisé par le fait que la réticulation est effectuée par immersion dans l'eau ou par irradiation.

12. Utilisation du matériau selon l'une quelconque des revendications 1 à 5 pour la fabrication de câbles électriques.
